(19) Europäisches Patentamt
European Patent Office
Office européen des brevets

(11) EP 3 998 312 A1

(12) EUROPEAN PATENT APPLICATION
published in accordance with Art. 153(4) EPC

(43) Date of publication:
**18.05.2022 Bulletin 2022/20**

(21) Application number: **20839961.8**

(22) Date of filing: **11.05.2020**

(51) International Patent Classification (IPC):
***C08L 67/04*** (2006.01) ***B29C 51/10*** (2006.01)
***B29C 55/28*** (2006.01) ***C08K 3/012*** (2018.01)
***C08K 3/26*** (2006.01) ***C08K 7/18*** (2006.01)
***C08L 101/16*** (2006.01)

(52) Cooperative Patent Classification (CPC):
**B29C 51/10; B29C 55/28; C08K 3/012; C08K 3/26; C08K 7/18; C08L 67/04; C08L 101/16**

(86) International application number:
**PCT/JP2020/018870**

(87) International publication number:
**WO 2021/010001 (21.01.2021 Gazette 2021/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.07.2019 JP 2019130196**

(71) Applicant: **TBM Co., Ltd.**
**Tokyo 100-0006 (JP)**

(72) Inventor: **SASAKAWA, Gouki**
**Tokyo 104-0061 (JP)**

(74) Representative: **Papula Oy**
**P.O. Box 981**
**00101 Helsinki (FI)**

# (54) BIODEGRADABLE RESIN COMPOSITION AND MOLDED ARTICLE

(57) Provided are an inorganic substance powder-blended biodegradable resin composition exhibiting excellent processability, sufficient mechanical strength and excellent flexibility as a molded product, and having economic advantage, as well as having excellent degradability under a natural environment and a molded product formed by using the composition. Provided is a molded product molded by using an inorganic substance powder-containing biodegradable resin composition including: a biodegradable resin and an inorganic substance powder in a range by mass of 10:90 to 70:30, in which the biodegradable resin is a multicomponent hydroxyalkanoic acid copolymer comprising lactic acid and other hydroxyalkanoic acid and the inorganic substance powder is heavy calcium carbonate.

## Description

Field

The present invention relates to a biodegradable resin composition and a molded product using the same. More specifically, the present invention relates to a biodegradable resin composition and a molded product having sufficient mechanical strength and excellent flexibility and having excellent degradability under an environment.

Background

Conventionally, biodegradable resins represented by polylactic acid have attracted attention as environmentally friendly resins because the resins turn into substances that originally exist in nature due to actions such as hydrolysis under the environment and microbial metabolism, and are resins that are widely used and expected to be more widely used in the future.

Polylactic acid has a mechanical strength comparable to general-purpose plastics but has poor heat resistance as compared with petrochemical polyesters represented by polyethylene terephthalate and polybutylene terephthalate. In addition, polylactic acid has relatively excellent hardness but lacks flexibility and processability and is inferior in lightness due to a high specific gravity.

Generally, the biodegradable resins have high production cost and are expensive in price. This issue is a major issue in order to replace the petrochemical plastics and spread the biodegradable resins.

Furthermore, although the molded products including the biodegradable resins such as polylactic acid are said to have biodegradability, hydrolysis reaction, which is a rate-determining step, is relatively slow, particularly near room temperature. Therefore, long time is required until microorganisms turn the molded product into resources. In particular, with respect to the molded product such as containers, the decomposition due to the action of an enzyme proceeds from the surface of the molded product, and thus it takes significant time to completely decompose the biodegradable resin forming the molded product. Consequently, the property of biodegradability is not fully utilized and there is much room for improvement, particularly in the case where marine pollution and the like are considered.

As described above, many problems still remain in the spread of the products that use the biodegradable resins.

Patent Literature 1 proposes a wallpaper having a resin layer including 50 parts by weight to 200 parts by weight of an inorganic filler selected from the group consisting of calcium carbonate, quicklime, potassium bicarbonate, talc, and silica relative to 100 parts by weight of a mixed resin of polylactic acid (PLA) and polyhydroxyalkanoic acid (PHA) on a substrate. This intends to impart flexibility to the resin while biodegradability is being retained by blending polyhydroxyalkanoic acid with polylactic acid. In the production of a molded product, however, uniform kneading of polyhydroxyalkanoic acid with polylactic acid is technically extremely difficult and the mechanical properties of the obtained molded products vary widely. With respect to the biodegradability, a problem of generating variation in which polyhydroxyalkanoic acid is decomposed faster in the compound has arisen.

Patent Literature 2 proposes that the elastic layer constituting a part of the cushion floor material is constituted of a composite resin including polyhydroxyalkanoic acid, including polyhydroxyalkanoic acid and polylactic acid, or including polyhydroxyalkanoic acid, an acrylic elastic resin, and polylactic acid. Although flexibility can be ensured, however, use of polyhydroxyalkanoic acid alone results in insufficient mechanical strength. In addition, in the case where polyhydroxyalkanoic acid and polylactic acid are blended, the difficulty in uniform kneading arises as described above. In the case where polyhydroxyalkanoic acid, the acrylic elastic resin, and polylactic acid are blended, biodegradability, which is the essential property, is impaired.

In order to improve the brittleness of polylactic acid, copolymerization of polylactic acid is proposed. Patent Literature 3 proposes that, for example, a multicomponent polylactic acid in which lactic acid and hydroxybutyric acid are copolymerized is obtained by setting the absorbance at a wavelength of 420 nm to 0.04 or less when a sugar concentration included in the aqueous solution of a hot water extract is 1% by mass, at the time of producing a multicomponent hydroxyalkanoic acid copolymer by culturing microorganisms in a medium including the hot water extract of biomass. It is expected that the copolymerization as described above will solve the problems of difficulty in uniform kneading at the time of blending the resins as described above and variation in mechanical properties of the molded product due to this difficulty. In this Patent Literature, however, no study was made on, for example, blend of an inorganic filler with thus obtained multicomponent polylactic acid.

Citation List

Patent Literature

Patent Literature 1: Published Japanese Translation of PCT International Publication for Patent Application No. 2017-503089
Patent Literature 2: Published Japanese Translation of PCT International Publication for Patent Application No. 2017-531101
Patent Literature 3: Japanese Patent Application Laid-open No. 2018-74927

## Summary

### Technical Problem

The present invention has been made in view of the above circumstances and an object of the present invention is to provide an inorganic substance powder-blended biodegradable resin composition exhibiting excellent processability, sufficient mechanical strength and excellent flexibility as a molded product, and having economic advantage, as well as having excellent degradability under a natural environment and a molded product formed by using the composition.

### Solution to Problem

The inventors of the present invention have conducted extensive studies and investigations in order to solve the above-described problems. As a result, the inventors of the present invention have found that, with respect to a biodegradable resin composition in which a biodegradable resin and an inorganic powder substance are blended, the biodegradable resin composition has both mechanical strength and flexibility as well as remarkably excellent degradability under an environment by forming a composition in which a multicomponent hydroxyalkanoic acid copolymer and heavy calcium carbonate are included in a range by mass of 10:90 to 70:30 using the multicomponent hydroxyalkanoic acid made of lactic acid and other polyhydroxyalkanoic acid as the biodegradable resin and using heavy calcium carbonate as the inorganic substance powder, and thus the present has been achieved.

The remarkably excellent degradability in the environment is caused in one sense by the fact that the biodegradability of the polymer itself to be used obtained by copolymerizing lactic acid with other polyhydroxyalkanoic acid represented by hydroxybutyric acid, for example, becomes better than the biodegradability of polylactic acid, for example. In addition, the inventors of the present invention have found that use of heavy calcium carbonate particles, that is, calcium carbonate particles obtained by mechanically crushing and classifying a natural raw material mainly composed of $CaCO_3$ such as limestone serving as the inorganic substance powder blended in the biodegradable resin, and blend of these heavy calcium carbonate particles in an amount of 30% by mass or more relative to the entire composition significantly contribute to the excellent degradability. In a molded product molded using such a biodegradable resin composition, a large number of fine voids around which the biodegradable resin does not adhere to the surface of the heavy calcium carbonate particles are formed or a large number of parts in which adhesion is significantly weak exist, immediately after molding the molded product at the interface of the multicomponent hydroxyalkanoic acid copolymer serving as the biodegradable resin constituting the matrix and the heavy calcium carbonate particles even without applying treatment such as stretching, in particular, at the time of molding because the heavy calcium carbonate particles have a large specific surface area due to an irregular shape or the like originated from the production history thereof. Obviously, the characteristics become more significant when the stretching treatment is applied. As a result, in the molded product, it is presumed that the surface area of the biodegradable resin becomes significantly large, and thus the field of degradation of the molded product caused by the action of enzymes is dramatically increased, and in addition heavy calcium carbonate exists, resulting in improving efficiency of the biodegradability.

In other words, the present invention for solving the above-described problems provides an inorganic substance powder-containing biodegradable resin composition including: a biodegradable resin and an inorganic substance powder in a range by mass of 10:90 to 70:30, in which the biodegradable resin is a multicomponent hydroxyalkanoic acid copolymer comprising lactic acid and other hydroxyalkanoic acid and the inorganic substance powder is heavy calcium carbonate.

In one aspect of the biodegradable resin composition according to the present invention, the inorganic substance powder-containing biodegradable resin composition in which a fraction of lactic acid in the multicomponent hydroxyalkanoic acid copolymer is 20% by mole to 80% by mole is described.

In one aspect of the biodegradable resin composition according to the present invention, the inorganic substance powder-containing biodegradable resin composition in which the other hydroxyalkanoic acid is hydroxybutyric acid is described.

In one aspect of the biodegradable resin composition according to the present invention, the inorganic substance powder-containing biodegradable resin composition in which an average particle diameter of the heavy calcium carbonate is 0.7 μm or more and 6.0 μm or less is described.

In one aspect of the biodegradable resin composition according to the present invention, the inorganic substance

powder-containing biodegradable resin composition in which the fraction of lactic acid is 50% by mole to 80% by mole and the inorganic substance powder-containing biodegradable resin composition is used for vacuum molding is described.

In one aspect of the biodegradable resin composition according to the present invention, the inorganic substance powder-containing biodegradable resin composition in which the fraction of lactic acid is 20% by mole to 50% by mole and the inorganic substance powder-containing biodegradable resin composition is used for inflation molding is described.

The present invention to solve the above-described problems is also achieved by a molded product comprising the inorganic substance powder-containing biodegradable resin composition comprising a biodegradable resin and an inorganic substance powder in a range by mass of 10:90 to 70:30, in which the biodegradable resin is a multicomponent hydroxyalkanoic acid copolymer comprising lactic acid and other hydroxyalkanoic acid and the inorganic substance powder is heavy calcium carbonate.

In one aspect of the molded product according to the present invention, a sheet for vacuum molding formed by extrusion molding the inorganic substance powder-containing biodegradable resin composition including the multicomponent hydroxyalkanoic acid copolymer having the fraction of lactic acid of 50% by mole to 80% by mole is described.

In one aspect of the molded product according to the present invention, a film formed by inflation molding the inorganic substance powder-containing biodegradable resin composition including the multicomponent hydroxyalkanoic acid copolymer having the fraction of lactic acid of 20% by mole to 50% by mole is described.

In one aspect of the molded product according to the present invention, a molded product formed by vacuum molding the sheet for vacuum molding is described.

Advantageous Effects of Invention

According to the present invention, with respect to the molded product molded from the biodegradable resin composition, a molded product in which biodegradability under an environment is significantly improved, while excellent processability, mechanical strength of the product, heat resistance, and the like are being sufficiently secured, can be provided with an economical advantage.

Description of Embodiments

Hereinafter, the present invention will be described in detail based on embodiments.

<<Biodegradable resin composition>>

The inorganic substance powder-containing biodegradable resin composition according to the present invention includes a biodegradable resin and an inorganic substance powder in a range by mass of 10:90 to 70:30, in which the biodegradable resin is a multicomponent hydroxyalkanoic acid copolymer comprising lactic acid and polyhydroxyalkanoic acid and the inorganic substance powder is heavy calcium carbonate. Hereinafter, each component constituting the biodegradable resin composition will be described in detail.

<Biodegradable resin>

The biodegradable resin used in the present invention is the multicomponent hydroxyalkanoic acid copolymer including lactic acid and other hydroxyalkanoic acid as comonomers.

The multicomponent hydroxyalkanoic acid copolymer according to the present invention is not particularly limited. Specifically, the multicomponent hydroxyalkanoic acid copolymer may include, for example, a lactic acid repeating unit (A) and other hydroxyalkanoic acid repeating unit (B) as illustrated in the following formula.

[Chemical Formula 1]

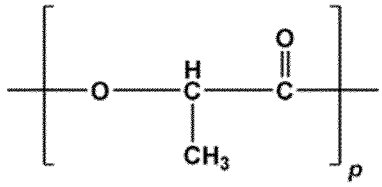

(A)

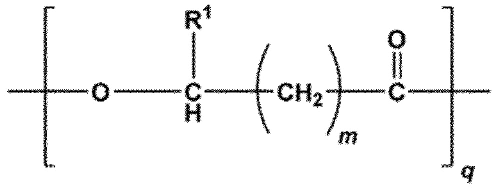

(B)

Here, in the formula, R is an alkyl group represented by $C_nH_{2n+1}$ and, for example, n is an integer of 1 to 12

and more preferably an integer of 1 to 8. m is, for example, an integer of 1 to 3.

Specific examples of the other hydroxyalkanoic acid constituting the repeating unit (B) include 3-hydroxybutyric acid (3HB), 3-hydroxyvaleric acid (3HV), 3-hydroxyhexanoic acid (3HH), and 3-hydroxybutyrate-co-3-hydroxyhexanoate (PHBH), 3-hydroxyoctanoic acid, 3-hydroxydecanoic acid, 4-hydroxybutyric acid (4HB), and 4-hydroxyvaleric acid (4HV). Of these compounds, in particular, 3-hydroxybutyric acid (3HB), 3-hydroxybutyrate-co-3-hydroxyhexanoate (PHBH), and the like are preferable and 3-hydroxybutyric acid (3HB) is more preferable.

Therefore, one preferable example of the multicomponent hydroxyalkanoic acid copolymer according to the present invention includes a lactic acid-3-hydroxybutyric acid copolymer, that is, poly(lactate-co-3-hydroxybutyrate) (P(LA-co-3HB)).

In the multicomponent hydroxyalkanoic acid copolymer according to the present invention, the other hydroxyalkanoic acid repeating unit (B) that is copolymerized with the lactic acid repeating unit (A) is not limited to a repeating unit derived from one kind of comonomer and may be a repeating unit derived from two kinds or more kinds of comonomers. In other words, the multicomponent hydroxyalkanoic acid copolymer according to the present invention may include not only two-component copolymers but also three-component copolymers or copolymers including more components.

As the comonomer constituting the multicomponent hydroxyalkanoic acid copolymer according to the present invention, both of lactic acid and the other hydroxyalkanoic acid have an asymmetric carbon in the main chain. Therefore, as the multicomponent hydroxyalkanoic acid copolymer, multicomponent hydroxyalkanoic acid copolymers having a crystalline D-form or L-form, an amorphous DL-form, and intermediate optical purity exist.

In the present invention, any of the multicomponent hydroxyalkanoic acid copolymer described above may be used as the multicomponent hydroxyalkanoic acid copolymer used as the biodegradable resin composition. From the viewpoint of desired properties such as heat resistance, impact resistance, flexibility, or elasticity in the molded product, the multicomponent hydroxyalkanoic acid copolymer having suitable properties can be appropriately used. The multicomponent hydroxyalkanoic acid copolymer may have any repeating units such as a block copolymer, a random copolymer, and a graft copolymer. The block copolymer may also include a form containing a D-form or L-form block polymer segment in the lactic acid repeating unit (A) and the other hydroxyalkanoic acid repeating unit (B) as described above.

Although not particularly limited, in the multicomponent hydroxyalkanoic acid copolymer according to the present invention, a fraction of lactic acid, that is, a value represented by $\{p/(p + q)\} \times 100$ in the above repeating units (A) and (B) is desirably preferably 20% by mole to 80% by mole. This is because the multicomponent hydroxyalkanoic acid copolymer having a fraction of lactic acid of 20% by mole to 80% by mole allows better flexibility to be obtained even when, for example, a large amount of heavy calcium carbonate as described below is blended with a multicomponent hydroxyalkanoic acid copolymer.

The optimum value of this fraction of lactic acid varies also depending on the application of the inorganic substance powder-containing biodegradable resin composition according to the present invention. For example, in the case where the inorganic substance powder-containing biodegradable resin composition is used for vacuum molding, the fraction of lactic acid is more preferably 50% by mole to 80% by mole. In other words, the molded product such as a container obtained by vacuum molding is desirably has such a range in order to obtain sufficient mechanical strength. For example, in the case where the inorganic substance powder-containing biodegradable resin composition is used for inflation molding, the fraction of lactic acid is desirably more preferably 20% by mole to 50% by mole. In other words, the film obtained by the inflation molding desirably has such a range in order to obtain sufficient stretchability and flexibility.

The weight average molecular weight (Mw) of the multicomponent hydroxyalkanoic acid copolymer according to the present invention is not particularly limited. The molecular weight thereof is not particularly limited as long as, in the case where the molded product for the target application, for example, a vacuum molded product or an inflation molded product is produced, the molded product exhibits substantially sufficient mechanical strength. Generally, the multicomponent hydroxyalkanoic acid copolymer having a low molecular weight causes the mechanical strength of the obtained molded product to be lowered and the biodegradation rate to be rapid, whereas the multicomponent hydroxyalkanoic acid copolymer having a high molecular weight allows the mechanical strength to be improved but causes deterioration in processability and difficulty in molding. Therefore, the weight average molecular weight (Mw) is preferably 50,000 or more and 300,000 or less and more preferably 100,000 or more and 200,000 or less.

Although not particularly limited, the melting point of the multicomponent hydroxyalkanoic acid copolymer according to the present invention is generally about 120°C to about 180°C and desirably more preferably about 140°C to about 170°C. The multicomponent hydroxyalkanoic acid copolymer having a melting point within such a range allows various kinds of molding processability to be excellent.

The synthetic method for obtaining the multicomponent hydroxyalkanoic acid copolymer according to the present invention is not particularly limited as long as a predetermined composition can be obtained and any known methods may be used.

A biosynthesis method is known as a typical production method. Basically, for example, with respect to a microorganism having an enzyme having a polymerization activity for polyhydroxyalkane such as poly-3-butyric acid, the multicomponent hydroxyalkanoic acid copolymer containing lactic acid and the other hydroxyalkanoic acid, which

can be used in the present invention, can be obtained by culturing a mutant having an enzyme exhibiting a lactic acid polymerization activity in the coexistence with hydroxyalkanoic acid in biomass.

As such a mutant, a genetically modified bacterium in which a predetermined foreign gene is expressed in a microorganism by a gene recombination technique may be used.

More specifically described, for example, as disclosed in Patent Literature 3 described above, *Escherichia coli,* various lactic acid bacteria including *Lactobacillus*, *Bacillus subtilis*, and other eubacteria suitable for producing polylactic acid may be used as the genetically modified bacterium. In particular, genetically modified *Escherichia coli* can be preferably used.

As this genetically modified *Escherichia coli,* transformed *Escherichia coli* by plasmids (phagemids) containing propionyl CoA transforming enzyme gene derived from *Megasphaera elsdenii*, polyhydroxy acid synthase gene having STQK mutation, β-ketothiolase gene derived from *Ralstonia eutropha*, and acetoacetyl-CoA reductase gene derived from *Ralstonia eutropha* is preferable. With respect to the polyhydroxyic acid synthase gene having STQK mutation, the gene in which yield and the like are further improved by an "enzyme evolution engineering" method that artificially randomly mutates and selects an enzyme with excellent characteristics may be used. In conformity with the bacterial species to be transformed, a bacterium may be transformed using a gene obtained by optimizing a codon or the like.

The multicomponent polyhydroxyalkanoic acid copolymer having a predetermined composition can be produced by culturing such a microorganism in biomass, for example, in a medium including a hot water extract of biomass described below.

The biomass used as a raw material may be derived from either woody plants or herbaceous plants as long as the biomass includes pentoses and hexoses as constituent sugars and can be used without particular limitation.

More specifically described, examples of the biomass derived from the woody plants include wood parts, barks, branches, and leaves of broad-leaf trees or coniferous trees; chips or barks of forest residual woods, thinned woods, and waste woods; sawdust generated from sawmills or the like, pruned branches and leaves of roadside trees, and construction waste materials. In addition, as biomass raw materials derived from herbaceous plants, biomass such as kenaf, hemp, bagasse, rice, rice straw, straw, and corn cob (including agricultural waste), residues and wastes of industrial crops such as crops for oil and crops for rubber, *Erianthus*, *Miscanthus*, and Napiergrass of herbaceous-based energy crops can also be used. For example, EFB (Empty Fruit Bunch) or the like can be used as the residues and wastes of the industrial crops. Of these biomasses, the biomass derived from the woody plants is preferably used and lignocellulosic-based biomass such as the wood parts of broad-leaf trees and coniferous trees is particularly preferably used.

These biomasses may be used singly or in combination of two or more of them. The biomass can be used as a dry solid, a solid including water, or a slurry. The biomass of the dry solid or the solid including water is preferably supplied to a heating and pressurizing device after the biomass is mixed with water to be in a slurry state.

A micronized product prepared by micronizing the part of wood parts and bark of the woody plants or the stems, branches, and leaves of the herbaceous plants may also be used. As the micronizing method, a method of such as pulverizing, crushing, or blasting with a refiner, a Wiley mill, a ball mill, or the like can be used.

In order to promote the reaction by the microorganisms, the hot water extract of the biomass as described above can be used.

The amount of water (liquid ratio) relative to the dry weight of the biomass at the hot water extraction treatment by the heating and pressurizing device is not particularly limited and may be, for example, about 1.0 to about 10.0 and preferably about 1.5 to about 5.0. The method of adding water in the hot water treatment is not particularly limited. Water may be added from the outside or water originally contained in the biomass may be used. In the case where steam is used during heating, water included in the steam may be used.

The treatment temperature of the hot water extraction treatment is, for example, 140°C to 200°C and preferably 160°C to 170°C in a pressurized state. The treatment temperature of less than 140°C causes an insufficient sugar concentration to be obtained, whereas the treatment temperature of more than 200°C causes hydrolysis of cellulose or overdecomposition of hemicellulose to occur, which is not preferable. The treatment time of the hot water extraction treatment is suitably 30 minutes to 120 minutes in a pressurized state at the above temperature. Here, the treatment time of less than 30 minutes fails to obtain a sufficient sugar concentration. Even when the treatment time exceeds 120 minutes, the concentration of the produced sugar hardly changes.

The original solution of the hot water extract obtained by the above heat treatment is concentrated under reduced pressure or using a permeable membrane or the like, if necessary. This concentration is preferably concentrated to a concentration suitable for acid hydrolysis, for example, to a concentration of 1.5 times to 30.0 times of the original solution.

Subsequently, the above concentrated solution is hydrolyzed in the presence of an acid to obtain a crude monosaccharide liquid. In this acid hydrolysis treatment, general acids such as sulfuric acid and hydrochloric acid used by those skilled in the art can be used. As the acid for the acid hydrolysis treatment, inorganic acids such as nitric acid and phosphoric acid or organic acids such as trifluoroacetic acid or formic acid may be used. As the time, temperature, pressure, and the like of the reaction of this acid hydrolysis treatment, general conditions known to those skilled in the

art in which cellulose and hemicellulose are hydrolyzed can be used. For example, the acid hydrolysis treatment of the present embodiment may be acid hydrolysis treatment in which dilute sulfuric acid is added to the concentrated solution, the pH is adjusted to about 1.0, the reaction is performed at about 120°C for 60 minutes or more, and the precipitate is removed after neutralization.

The crude monosaccharide liquid may be, for example, a saccharified liquid saccharified by an enzyme such as cellulase or hemicellulase or a hydrosaccharified liquid saccharified by hydrothermal saccharification with subcritical water.

Subsequently, the above acid-hydrolyzed crude monosaccharide liquid is passed through a column or the like to purify. Consequently, a purified solution (hereinafter referred to as "permeated liquid") in a state where the absorbance at a wavelength of 420 nm is 0.04 or less when the sugar concentration of sugar included in the aqueous liquid of the hot water extract is 1% by mass or a purified sugar solution is obtained.

Using the biomass, in particular, the hot water extract obtained as described above as the only carbon source, microorganisms having an enzyme exhibiting lactic acid polymerization activity in the coexistence with hydroxyalkanoic acid are cultured under general culture conditions, whereby the multicomponent hydroxyalkanoic acid copolymer according to the present invention can be accumulated in the microorganism and recovered.

Specifically, the genetically modified *Escherichia coli* as described above is aerobically cultured at 37°C for 12 hours to 90 hours using, for example, the above general medium for culturing *Escherichia coli,* whereby the multicomponent hydroxyalkanoic acid copolymer can be accumulated in the bacterial cells and recovered. At the time of this culture, a general medium such as an LB medium can be used. At the time of culturing, for example, ammonium salt, peptone, meat extract, yeast extract, or the like may be added as a nitrogen source. At the time of culturing, for example, phosphate, sulfate, sodium chloride, or the like may be added as an inorganic substance. At the time of culturing, antibiotics such as kanamycin, ampicillin, and tetracycline may be added to the medium for plasmid retention and culture may be performed.

The microorganism used for producing the multicomponent hydroxyalkanoic acid copolymer according to the present invention, for example, the genetically modified *Escherichia coli* as described above accumulates the multicomponent hydroxyalkanoic acid copolymer in the cultured bacteria, and thus the multicomponent hydroxyalkanoic acid copolymer can be easily collected from the recovered bacterial cells and produced. The multicomponent hydroxyalkanoic acid copolymer may be obtained by centrifuging and pulverizing the bacterial cells of these cultured bacteria and eluting the multicomponent hydroxyalkanoic acid copolymer with a general solvent such as chloroform and methanol. At the time of this elution, the residue or the like may be filtered with a filter such as a PTFE membrane.

The multicomponent hydroxyalkanoic acid copolymer according to the present invention can be prepared not only by the biosynthetic methods as described in detail above but also by chemical synthetic methods. More specifically, at the time of synthesizing poly(D-lactic acid), poly(L-lactic acid), and poly(DL-lactic acid) by, for example, a direct melt polymerization method, a solid phase polymerization method, a direct condensation polymerization method of lactic acid, and a melt ring-opening polymerization method of lactide, the multicomponent hydroxyalkanoic acid copolymer according to the present invention can be produced by using not only lactic acid but also the other monomers copolymerizable with the lactic acid component such as 3-hydroxybutyric acid (3HB), 3-hydroxyvaleric acid (3HV), 3-hydroxyhexanoic acid (3HH), 3-hydroxybutyrate-co-3-hydroxyhexanoate (PHBH), 3-hydroxyoctanoic acid, 3-hydroxydecanoic acid, 4-hydroxybutyric acid (4HB), and 4-hydroxyvaleric acid (4HV) and performing condensation polymerization of lactic acid and the other monomer.

<Heavy calcium carbonate particles>

In the biodegradable resin composition forming the biodegradable resin molded product according to the present invention, the heavy calcium carbonate particles serving as the inorganic substance powder are blended together with the multicomponent hydroxyalkanoic acid copolymer containing lactic acid and hydroxyalkanoic acid as described above. The heavy calcium carbonate is a product obtained by mechanically crushing and processing natural calcium carbonate as described below, and is clearly distinguished from synthetic calcium carbonate produced by chemical precipitation reaction or the like.

In the present specification, heavy calcium carbonate refers to a product produced by crushing and classifying natural calcium carbonate such as calcite (for example, limestone, chalk, and marble), shell, and coral. Limestone serving as the raw material of heavy calcium carbonate is produced in abundance in Japan with a high degree of purity and can be remarkably economically obtained.

Either a wet method or a dry method may be selected as the method for crushing heavy calcium carbonate. The dry crashing without the steps such as the dehydration step and the drying step is advantageous from the economical viewpoint. A crusher is also not particularly limited. An impact crusher, a crusher using a crushing medium such as a ball mill, a roller mill, and the like may be used.

The classification may be classification performed by air classification, wet cyclone, and decanter. Surface

treatment may be performed in any step of before crushing, during crushing, before classification, and after classification, and is preferably performed before classification. The surface treatment before classification allows the narrower particle size distribution to be obtained in high efficiency. A part of a surface treatment agent may be added as a grinding aid before crushing or during crushing and the remaining part may be added in a later step to perform the surface treatment.

In order to enhance dispersibility or reactivity of the heavy calcium carbonate particles, the surface of the heavy calcium carbonate particles may be previously subjected to surface modification. Examples of the surface modification method include physical methods such as plasma treatment and a method in which the surface is subjected to chemical surface treatment with a coupling agent or a surfactant. Examples of the coupling agent include silane coupling agents and titanium coupling agents. The surfactant may be any of anionic, cationic, nonionic, and amphoteric surfactants and examples thereof include higher fatty acids, higher fatty acid esters, higher fatty acid amides, and higher fatty acid salts.

In the present invention, the reason why the heavy calcium carbonate particles are used as the inorganic substance powder blended in the multicomponent hydroxyalkanoic acid copolymer including lactic acid and hydroxyalkanoic acid is because use of the heavy calcium carbonate particles allows a large number of fine voids without adhesion to be formed between the multicomponent hydroxyalkanoic acid copolymer serving as the biodegradable resin to be the matrix and the heavy calcium carbonate particle surface and the biodegradability of the multicomponent hydroxyalkanoic acid copolymer to be promoted by elution of alkaline components from the heavy calcium carbonate when water is penetrated into the voids at such interfaces.

Although not particularly limited, the average particle diameter of the heavy calcium carbonate particles is preferably 0.7 μm or more and 6.0 μm or less, more preferably 1.0 μm or more and 5.0 μm or less, and further preferably 1.5 μm or more and 3.0 μm or less. The average particle diameter of the inorganic substance powder (heavy calcium carbonate particles) described in the present specification means a value calculated from the measurement result of the specific surface area by the air permeation method in accordance with JIS M-8511. As a measuring instrument, for example, a specific surface area measuring apparatus Type SS-100 manufactured by Shimadzu Corporation can be preferably used. Although depending on the layer thickness of the molded product, the resin composition including the heavy calcium carbonate particles having an average particle diameter of more than 6.0 μm may cause, for example, the heavy calcium carbonate particles to be protruded from the surface of the molded product and thus the heavy calcium carbonate particles to fall off when a sheet-shaped molded product is formed using the composition, or the surface properties, mechanical strength, or the like to be impaired. In particular, in the particle diameter distribution, particles having a particle diameter of 45 μm or more are preferably excluded. On the other hand, excessively fine particles cause the viscosity at the time of kneading with the above-described biodegradable resin to significantly increase and thus production of the molded products may be difficult. Therefore, the average particle diameter is preferably set to 0.7 μm or more.

Unlike light calcium carbonate produced by the synthetic method, for example, surface irregularity and large specific surface area due to the particle formation by the crushing process are particularly important for the heavy calcium carbonate particles used in the present invention. As described above, there is a state where a large number of fine voids around which the multicomponent hydroxyalkanoic acid copolymer does not adhere to the surface of the heavy calcium carbonate particles are formed or a state where a large number of parts in which adhesion is significantly weak exist immediately after molding the molded product at the time of molding at the interface of the multicomponent hydroxyalkanoic acid copolymer constituting the matrix and the heavy calcium carbonate particles even without applying treatment such as stretching in particular because the heavy calcium carbonate particles blended in the biodegradable resin composition have such an irregular shape and large specific surface area.

From this reason, the specific surface area of the heavy calcium carbonate particles is desirably 0.1 $m^2/g$ or more and 10.0 $m^2/g$ or less, more preferably 0.2 $m^2/g$ or more and 5.0 $m^2/g$ or less, and further preferably 1.0 $m^2/g$ or more and 3.0 $m^2/g$ or less. The BET adsorption method described here is in accordance with a nitrogen gas adsorption method. The heavy calcium carbonate particles having the specific surface area within this range allow the biodegradability under the natural environment to be excellently promoted in the obtained molded product because the multicomponent hydroxyalkanoic acid copolymer has many surfaces serving as the starting points of the biodegradation reaction from the reasons described above and thus, at the same time, deterioration in processability of the resin composition due to the blend of the heavy calcium carbonate particles to be reduced.

The irregularity of the heavy calcium carbonate particles can be represented by the low degree of spheroidization of the particle shape. Specifically, the roundness is desirably 0.50 or more and 0.95 or less, more preferably 0.55 or more and 0.93 or less, and further preferably 0.60 or more and 0.90 or less. When the heavy calcium carbonate particles used in the present invention have the roundness within such ranges, a state where a large number of fine voids without adhesion are formed or a state where a large number of parts where adhesion is very weak exist is likely to be formed at the interface between the multicomponent hydroxyalkanoic acid copolymer forming the matrix and the heavy calcium carbonate particles. Therefore, the heavy calcium carbonate particles are suitable for enhancing biodegradability under the natural environment and, at the same time, provide excellent mechanical strength and molding processability as the product.

Here, the roundness can be represented by (Projected area of particle)/(Area of a circle having the same perimeter as the projected perimeter of particle). The method for measuring the roundness is not particularly limited. For example, the projected area of the particle and the projected perimeter of the particle are measured from a micrograph and designated as (A) and (PM), respectively. When the radius of a circle having the same perimeter as the projected perimeter of the particle is designated as (r),

$$PM = 2\pi r \quad (1).$$

When the area of the circle having the same perimeter as the projected perimeter of the particle is designated as (B),

$$B = \pi r^2 \quad (2).$$

Transforming Formula (1) results in $r = PM/2\pi \quad (3)$.

Therefore, substituting Formula (3) into Formula (2) results in

$$B = \pi \times (PM/2\pi)^2 \quad (4).$$

Therefore, the roundness is determined as Roundness = $A/B = A \times 4\pi/(PM)^2$.

The particles to be measured are sampled so as to represent the particle size distribution of the powder. As the number of the measured particles becomes larger, the measured value becomes more reliable. In consideration of the measurement time, the roundness is said to be determined by the average value of the roundness of about 100 particles. In the present specification, the average value of the roundness of 100 particles are also used. The measurement is performed with generally commercially available image analysis software using the projection image of each particle obtained by a scanning microscope, a stereomicroscope, or the like, whereby the roundness can be determined.

The heavy calcium carbonate particles included in the inorganic substance powder-containing biodegradable resin composition according to the present invention are preferably particles the surface of which is partially oxidized and in which the composition of calcium oxide is partially included in the state of the molded product. The degree of this oxidation is not particularly limited. The effect of promoting the biodegradability is obtained even at a relatively small part of the particle surface, for example, a proportion sufficiently smaller than 2% of the volume of the particles, and thus excessive oxidation is unnecessary. With respect to the partial oxidation of the surface of the heavy calcium carbonate particles included in such a molded product, the heavy calcium carbonate particles used for molding are not particularly required to be previously subjected to heat treatment separately. At the time of mixing and melting the multicomponent hydroxyalkanoic acid copolymer and the heavy calcium carbonate particles to produce the molded product, the surface of the heavy calcium carbonate particles may be oxidized due to subjecting the heavy calcium carbonate particles to the heat history. The generation of calcium oxide on the surface of particles by oxidation can be determined and quantified by, for example, an EDTA titration method or a potassium permanganate titration method defined in JIS R 9011:2006.

The blend proportion (% by mass) of the above-described multicomponent hydroxyalkanoic acid copolymer and the heavy calcium carbonate particles included in the inorganic substance powder-containing biodegradable resin composition according to the present invention is not particularly limited as long as the blend proportion is in a range of 10:90 to 70:30. The proportion is preferably 30:70 to 60:40 and further preferably 40:60 to 50:50. This is because, with respect to the blend proportion of the multicomponent hydroxyalkanoic acid copolymer and the heavy calcium carbonate particles, the resin composition having a proportion of the heavy calcium carbonate of less than 30% by mass results in not obtaining the predetermined physical properties of the molded product, such as certain texture and impact resistance, obtained by using the biodegradable resin composition due to the blend of the heavy calcium carbonate particles and having inferior economic efficiency, whereas the resin composition having a proportion of the heavy calcium carbonate of more than 90% by mass results in difficulty in molding processing such as extrusion molding and injection molding.

<Other additives>

In the inorganic substance powder-containing biodegradable resin composition according to the present invention, other thermoplastic resins may be blended, if necessary. The blended amount of such other thermoplastic resins is preferably 20% by mass or less and more preferably 10% by mass or less relative to the entire resin components so

as not to substantially affect the biodegradability of the inorganic substance powder-containing biodegradable resin composition according to the present invention. The particularly preferable aspect is an aspect in which no other thermoplastic resin is blended. Examples of the thermoplastic resin include polyolefin-based resins such as polyethylene-based resins, polypropylene-based resins, poly(methyl-1-pentene), and ethylene-cyclic olefin copolymers; functional group-containing polyolefin resins such as ethylene-vinyl acetate copolymers, ethylene-acrylic acid copolymers, ethylene-methacrylic acid copolymers, metal salts of ethylene-methacrylic acid copolymers (ionomers), ethylene-acrylic acid alkyl ester copolymers, ethylene-methacrylic acid alkyl ester copolymers, maleic acid-modified polyethylene, and maleic acid-modified polypropylene; polyamide-based resins such as nylon-6, nylon-6,6, nylon-6,10, and nylon-6,12; thermoplastic polyester resins such as aromatic polyester-based resins including polyethylene terephthalate and copolymers thereof, polyethylene naphthalate, and polybutylene terephthalate, and aliphatic polyester-based resins including polylactic acids such as poly(L-lactic acid), poly(D-lactic acid), and poly(DL-lactic acid), poly(3-hydroxybutyric acid), poly(3-hydroxyvaleric acid), poly(3-hydroxyhexanoic acid), poly(3-hydroxybutyrate-co-3-hydroxyhexanoate), poly(3-hydroxyoctanoic acid), poly(3-hydroxydecanoic acid), poly(4-hydroxybutyric acid), poly(4-hydroxyvaleric acid), and polybutylene succinate; polycarbonate resins such as aromatic polycarbonates and aliphatic polycarbonates; polystyrene-based resins such as atactic polystyrene, syndiotactic polystyrene, acrylonitrile-styrene (AS) copolymers, and acrylonitrile-butadiene-styrene (ABS) copolymers; polyvinyl chloride-based resins such as polyvinyl chloride and polyvinylidene chloride; polyphenylene sulfide; and polyether-based resins such as polyethersulphone, polyetherketone, and polyetheretherketone.

The inorganic substance powder-containing biodegradable resin composition according to the present invention may be blended with other additives as auxiliary agents, if necessary. As other additives, for example, a plasticizer, a filler other than calcium bicarbonate particles, a colorant, a lubricant, a coupling agent, a fluidity improver, a dispersant, an antioxidant, an ultraviolet absorber, a flame retardant, a stabilizer, an antistatic agent, and a foaming agent may be blended. These additives may be used singly or in combination of two or more of the additives. These additives may be blended in the kneading step described below or may be previously blended in the biodegradable resin composition before the kneading step. With respect to the inorganic substance powder-containing biodegradable resin composition according to the present invention, the amount of other additives to be blended is not particularly limited as long as other additives do not inhibit the desired effect due to the blend of the above-described multicomponent hydroxyalkanoic acid copolymer and the calcium bicarbonate particles. For example, each of other additives is included desirably in a range of about 0 to about 5% by mass and a total of the other additives is blended in a range of 10% by mass or less in the case where the total mass of the inorganic substance powder-containing biodegradable resin composition is 100%.

Hereinafter, among these other additives, the additives considered to be important will be described. However, the other additives are not limited thereto.

Examples of the plasticizer include lactic acid, a lactic acid oligomer having a weight average molecular weight of 3,000 or less, and branched polylactic acid (refer to, for example, WO 2010/082639 Pamphlet).

Examples of the fillers other than the heavy calcium carbonate particles include carbonates (excluding heavy calcium carbonate), sulfates, silicates, phosphates, borates, oxides of calcium, magnesium, aluminum, titanium, iron, and zinc, or hydrates thereof in the form of powder. Specific examples include light calcium carbonate, magnesium carbonate, zinc oxide, titanium oxide, silica, alumina, clay, talc, kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, and graphite. These fillers may be synthetic fillers or fillers originated from natural minerals.

As the colorants, any of the known organic pigments, inorganic pigments, and dyes may be used. Specific examples include organic pigments such as azo, anthraquinone, phthalocyanine, quinacridone, isoindolinone, dioxazine, perinone, quinophthalone, and perylene pigments, and inorganic pigments such as ultramarine blue, titanium oxide, titanium yellow, and iron oxide (red iron oxide), chromium oxide, zinc white, and carbon black.

Examples of lubricants include fatty acid-based lubricants such as stearic acid, hydroxystearic acid, complex-type stearic acid, and oleic acid, aliphatic alcohol-based lubricants, aliphatic amide-based lubricants such as stearamide, oxystearamide, oleylamide, erucylamide, ricinolamide, behenamide, methylolamide, methylenebisstearamide, methylenebisstearobehenamide, bisamide acids of higher fatty acids, and complex-type amide, aliphatic ester-based lubricants such as n-butyl stearate, methyl hydroxystearate, polyvalent alcohol fatty acid esters, saturated fatty acid esters, and ester-based waxes, and fatty acid metal soap-based lubricants.

As the antioxidants, phosphorus-based antioxidants, phenol-based antioxidants, and pentaerythritol-based antioxidants can be used. Phosphorus-based antioxidants, more specifically, phosphorus-based antioxidant stabilizers such as phosphorous acid esters and phosphoric acid esters are preferably used. Examples of the phosphorous acid esters include triesters, diesters, and monoesters of phosphorous acid such as triphenyl phosphite, tris(nonylphenyl) phosphite, and tris(2,4-di-t-butylphenyl) phosphite.

Examples of the phosphoric acid ester include trimethyl phosphate, triethyl phosphate, tributyl phosphate,

trioctyl phosphate, triphenyl phosphate, tricresyl phosphate, tris(nonylphenyl) phosphate, and 2-ethylphenyl diphenyl phosphate. These phosphorus-based antioxidants may be used singly or in combination of two or more of the phosphorus-based antioxidants.

Examples of the phenol-based antioxidants include α-tocopherol, butylhydroxytoluene, sinapyl alcohol, vitamin E, n-octadecyl-3-(3,5-di-t-butyl-4-hydroxyphenyl) propionate, 2-t-butyl-6-(3'-t-butyl-5'-methyl-2'-hydroxybenzyl)-4-methylphenyl acrylate, 2,6-di-t-butyl-4-(N,N-dimethylaminomethyl)phenol, 3,5-di-t-butyl-4-hydroxybenzylphosphonate diethyl ester, and tetrakis[3-(3,5-di-t-butyl-4-hydroxyphenyl)propionyloxymethyl]methane. These phenol-based antioxidants may be used singly or in combination of two or more of the phenol-based antioxidants.

The flame retardants are not particularly limited. For example, halogen-based flame retardants, phosphorus-based flame retardants, or non-phosphorus-halogen-based flame retardants such as metal hydrates may be used. Examples of the halogen-based flame retardants include halogenated bisphenylalkanes, halogenated bisphenol-based compounds such as halogenated bisphenylethers, halogenated bisphenylthioethers, and halogenated bisphenylsulfones, and bisphenol-bis(alkyl ether)-based compounds such as brominated bisphenol A, brominated bisphenol S, chlorinated bisphenol A, and chlorinated bisphenol S. Examples of the phosphorus-based flame retardants include tris(diethylphosphinic acid) aluminum, bisphenol A bis(diphenyl phosphate), triaryl isopropyl phosphate compounds, cresyl di-2,6-xylenyl phosphate, and condensed aromatic phosphoric acid esters. Examples of the metal hydrate include aluminum trihydrate, magnesium dihydroxide, or a combination thereof. These flame retardants may be used singly or in combination of two or more of them. For example, antimony oxides such as antimony trioxide and antimony pentoxide, zinc oxide, iron oxide, aluminum oxide, molybdenum oxide, titanium oxide, calcium oxide, magnesium oxide can also be used together as flame retardant aids.

The foaming agents are compounds that cause phase change from solid to gas or liquid to gas by mixing with or injecting with pressure into the biodegradable resin composition serving as the raw material in a melted state in a melting and kneading apparatus or gas itself, and are mainly used for controlling an expansion ratio (foaming density) of a foamed sheet. As the foaming agent dissolved in the biodegradable resin composition serving as the raw material, a foaming agent that is liquid at room temperature causes phase change into gas due to the resin temperature and is dissolved in the melted resin, and a foaming agent that is gas at room temperature is dissolved in the melted resin as it is without causing phase change. The foaming agent dispersed and dissolved in the melted resin expands inside the sheet because the pressure is released at the time of extruding the melted resin from the extrusion die into a sheet-like product to provide a foamed sheet by forming many fine closed cells inside the sheet. The foaming agent secondarily acts as a plasticizer that lowers the melt viscosity of the biodegradable resin composition serving as a raw material and can lower the temperature for achieving a plasticized state of the biodegradable resin composition serving as the raw material.

Examples of the foaming agent include aliphatic hydrocarbons such as propane, butane, pentane, hexane, and heptane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, chloromethane, chloroethane, dichlorotrifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, and perfluorocyclobutane; inorganic gases such as carbon dioxide, nitrogen, and air; and water.

The content of the foaming agent included in the foaming agent in the molding step can be appropriately determined depending on the amounts of the multicomponent hydroxyalkanoic acid copolymer, the heavy calcium carbonate particles, and the like, and is preferably in the range of 0.04% by mass to 5.00% by mass relative to the total mass of the inorganic substance powder-containing biodegradable resin composition.

<<Molded product>>

The molded product according to the present invention is a molded product molded using the inorganic substance powder-containing biodegradable resin composition made of the multicomponent hydroxyalkanoic acid copolymer in which the above-described heavy calcium carbonate particles are blended.

The shape or the like of the molded product according to the present invention is not particularly limited and may be in various forms. Various molded products, for example, films, sheets, container products for food and other container products, or consumable products disposed in a relatively short period of time in the fields of daily necessities, automotive parts, electric/electronic parts, construction members, and the like can be molded.

The thickness of the molded product according to the present invention is also not particularly limited and may vary from a thin thickness to a thick thickness depending on the form of the molded product. For example, the molded product having a thickness of 10 μm to 5,000 μm and more preferably having a thickness of 30 μm to 2,000 μm is exemplified. The thickness within this range allows a molded product that has no problem of moldability and processability, does not cause thickness deviation, is uniform, and has no defect to be molded.

For example, in the case where the form of the molded product is a sheet for vacuum molding, the thickness is desirably more preferably 300 μm to 2,000 μm and further preferably 500 μm to 1,000 μm. A sheet having a thickness within such a range allows a secondary molded product having sufficient mechanical strength, excellent surface properties, and the like to be obtained in excellent processability even by the subsequent vacuum molding.

For example, in the case where the form of the molded product is a film formed by inflation molding, the thickness is desirably more preferably 10 μm to 200 μm and further preferably 30 μm to 100 μm. A film having a thickness within such a range allows a molded product having sufficient mechanical strength and flexibility and also having excellent surface properties and the like to be formed.

In one embodiment of the molded product according to the present invention, the members constituting the molded product may have a laminated structure. As described above, the molded product formed from the inorganic substance powder-containing biodegradable resin composition made by blending the heavy calcium carbonate particles in the multicomponent hydroxyalkanoic acid copolymer has, for example, excellent mechanical strength, flexibility, heat resistance, and biodegradability. In order to provide various functionalities such as a non-migration property of the included components, scratch resistance, glossiness, and heat sealability to the surface, an aspect in which at least one surface of a layer including the inorganic substance powder-containing biodegradable resin composition is covered with a surface layer may be employed. In the case where both surfaces of the layer including the inorganic substance powder-containing biodegradable resin composition are covered, the surface layers arranged on the respective surfaces may be the same or different. Other single intermediate layer or a plurality of intermediate layers may be provided between the surface layer and the layer including the inorganic substance powder-containing biodegradable resin composition. The material constituting such a surface layer is not particularly limited because various materials can be used depending on the function to be provided and the like. For example, an aspect of a biodegradable resin, in particular the multicomponent hydroxyalkanoic acid copolymer or polylactic acid as described above, having no additives or blending significantly low amounts of additives, or petroleum-based synthetic resins such as polyolefin resins, additive-free polypropylene film layers, and additive-free polyethylene film layers, can be exemplified. The thickness of these surface layers may be sufficiently thin as compared with the thickness of the layer including the inorganic substance powder-containing biodegradable resin composition and, for example, about 1 μm to about 40 μm and more preferably about 2 μm to about 15 μm. A method for covering at least one surface of the layer including the inorganic substance powder-containing biodegradable resin composition with the surface layer is also not particularly limited. As the method, a method in which a separately prepared film for the surface layer molded by, for example, inflation molding adheres to one surface or both surfaces of the layer including the inorganic substance powder-containing biodegradable resin composition by laminating processing, or a method in which, as conventionally known methods, the biodegradable composition for the surface layer is co-extruded using a two-color die or a multi-color die together with the inorganic substance powder-containing biodegradable resin composition according to the present invention to mold a laminated sheet may be employed.

«Method for producing molded product»

As the method for producing the molded product obtained from the inorganic substance powder-containing biodegradable resin composition according to the present invention, common methods may be used. For example, any known molding methods such as an injection molding method, a foam injection molding method, an injection compression molding method, an extrusion molding method, a blow molding method, an inflation molding method, a press molding method, a calendar molding method, a vacuum molding method, an in-mold molding method, a gas press molding method, a two-color or multi-color molding method, and a sandwich molding method may be employed. In the case where the inorganic substance powder-containing biodegradable resin composition according to the present invention includes the foaming agent and a molded product in an aspect of a foamed product is obtained, conventionally known methods including liquid phase foaming method such as injection foaming, extrusion foaming, and blow forming, or solid phase foaming methods such as bead foaming, batch foaming, press foaming, and atmospheric secondary foaming may be employed as the method for molding the foamed product as long as the foamed molded product can be molded into a desired shape.

The molding temperature at the time of molding cannot be unconditionally specified because the molding temperature varies to some extent depending on, for example, the blend proportion of the comonomer in the multicomponent hydroxyalkanoic acid copolymer. For example, molding is desirably performed at a melted resin temperature of 140 to 200°C and more preferably in the temperature range of 160 to 180°C. In such a temperature range, molding can be performed with an excellent shape-following property without deteriorating the multicomponent hydroxyalkanoic acid copolymer.

As described above, in the molding of the molded product according to the present invention, forming of a multilayer product with other resin composition is possible. The other resin composition can be applied to one surface or both surfaces of the layer including the inorganic substance powder-containing biodegradable resin composition according to the present invention to form a multilayer product, or conversely, the inorganic substance powder-containing

biodegradable resin composition according to the present invention can be applied to one surface or both surfaces of the layer including the other resin composition to form a multilayer product, depending on the purpose.

In the case of forming the biodegradable resin composition into a sheet-like product or a film-like product, the sheet-like product or the film-like product can be stretched in the uniaxial direction, the biaxial direction, or the multiaxial direction (stretching by, for example, an inflation method or a tubular method) during or after the molding. Performing such stretching allows more voids to be formed between the heavy calcium carbonate particles and the multicomponent hydroxyalkanoic acid copolymer serving as the matrix in the structure of the sheet or film and thus the biodegradability of the molded product to be enhanced. However, with respect to the molded product according to the present invention, even an aspect of no stretching or substantially no stretching, the molded product may have sufficient mechanical strength and, at the same time, provide excellent biodegradability.

The mixing of the multicomponent hydroxyalkanoic acid copolymer and the heavy calcium carbonate particles in the inorganic substance powder-containing biodegradable resin composition according to the present invention may be appropriately determined in accordance with the molding method (for example, extrusion molding, injection molding, and vacuum molding). For example, the multicomponent hydroxyalkanoic acid copolymer and the heavy calcium carbonate particles may be kneaded and melted before being charged into a molding machine from the hopper, or the multicomponent hydroxyalkanoic acid copolymer and the heavy calcium carbonate particles may be kneaded, melted, and at the same time, molded. In melting and kneading, the heavy calcium carbonate particles are preferably uniformly dispersed in the multicomponent hydroxyalkanoic acid copolymer and, at the same time, the mixture is kneaded by applying high shear stress. For example, the mixture is preferably kneaded using a biaxial kneader.

In the method for producing the molded product according to the present invention, the inorganic substance powder-containing biodegradable resin composition made by blending the multicomponent hydroxyalkanoic acid copolymer and the heavy calcium carbonate particles to be used in a predetermined proportion may or may not be in the form of pellets. In the case of the form of pellets, the shape of the pellets is not particularly limited. For example, pellets having a shape of cylinder, sphere, and ellipsoid may be formed. A pelletizing operation for obtaining the pellets can be performed by procedures or apparatuses commonly used by those skilled in the art. For example, while the multicomponent hydroxyalkanoic acid copolymer is being melted using a twin-screw extruder or the like, the heavy calcium carbonate particles and other additives are added and the resultant mixture is melted and kneaded, and extruded into a strand shape, and cooled. Thereafter, the pellets are produced using a pelletizer. The thus produced pellets can be used for injection molding or the like after sufficiently drying to remove water.

The size of the pellets may be appropriately determined depending on the shape. For example, in the case of the spherical pellets, the diameter may be 1 to 10 mm. In the case of the ellipsoidal pellets, the pellets may have an elliptical shape with an aspect ratio of 0.1 to 1.0 and may have vertical and horizontal lengths of 1 to 10 mm. In the case of cylindrical pellets, the diameter may be within a range of 1 to 10 mm and the length may be within a range of 1 to 10 mm.

## Examples

Hereinafter, the present invention will be described more specifically based on Examples. The present invention, however, is not limited to these Examples.

### (Evaluation methods)

Each physical property value described in the following Examples, Reference Examples, and Comparative Examples was evaluated by the following methods.

### (BET Specific surface area)

The BET specific surface area was determined by a nitrogen gas adsorption method using BELSORP-mini manufactured by MicrotracBEL Corp.

### (Average particle diameter)

The average particle diameter was calculated from the measurement result of a specific surface area by an air permeation method in accordance with JIS M-8511 using a specific surface area measuring apparatus Type SS-100 manufactured by Shimadzu Corporation.

### (Roundness)

So as to represent the particle distribution of powder, 100 particles were sampled. The particle image of the

projection image of each of these particles obtained using an optical micrometer was subjected to image analysis using a commercially available image analysis software to determine the roundness. As a measurement principle, the projected area of the particle and the projected perimeter of the particle are measured and designated as (A) and (PM), respectively. When the radius of a circle having the same perimeter as the projected perimeter of the particle is designated as (r),

$$PM = 2\pi r \quad (1).$$

When the area of the circle having the same perimeter as the projected perimeter of the particle is designated as (B),

$$B = \pi r^2 \quad (2).$$

Transforming Formula (1) results in $r = PM / 2\pi$ (3).

Therefore, substituting Formula (3) into Formula (2) results in

$$B = \pi \times (PM/2\pi)^2 \quad (4).$$

Therefore, the roundness is determined as Roundness = A/B = $A \times 4\pi/(PM)^2$.

(Tensile modulus and elongation)

The tensile test of the sheet was performed using Strograph manufactured by Toyo Seiki Seisaku-sho, Ltd. at a temperature of 23°C. As the shape of the test specimen, the dumbbell-shaped No. 3 test specimen in accordance with JIS K6251:2017 was used. The stretching speed was 200 mm/minute. The tensile modulus and elongation were measured from the obtained stress-strain curve.

(Biodegradability)

The film or sheet (30 mm × 30 mm) prepared in each of Examples and Comparative Examples was placed in a 25 ml vial together with 10 ml of seawater reserved at room temperature (25°C ± 5°C) and left for one month. Thereafter, the state of the film or sheet was visually observed and evaluated according to the following evaluation criteria.

◦: The film or sheet is decomposed.
Δ: The film or sheet is partially decomposed.
×: No change is observed in the film or sheet.

(Materials)

The components used in the following Examples and Comparative Examples were as follows.

- Resin component (P)

  P1: P(LA-co-3HB) (Fraction of lactic acid 80% by mole)
  P2: P(LA-co-3HB) (Fraction of lactic acid 70% by mole)
  P3: P(LA-co-3HB) (Fraction of lactic acid 50% by mole)
  P4: P(LA-co-3HB) (Fraction of lactic acid 30% by mole)
  P5: P(LA-co-3HB) (Fraction of lactic acid 20% by mole)
  Pa: Poly(L-lactic acid)
  Pb: Poly(3-hydroxybutyric acid)

- Calcium carbonate (I)

  I1: Heavy calcium carbonate particles Average particle diameter: 2.2 μm, BET Specific surface area: 1.0 $m^2$/g,

Roundness: 0.85
12: Heavy calcium carbonate particles Average particle diameter: 1.1 μm, BET Specific surface area: 3.2 $m^2/g$, Roundness: 0.55
13: Heavy calcium carbonate particles Average particle diameter: 3.6 μm, BET Specific surface area: 0.6 $m^2/g$, Roundness: 0.90
Ia: Light calcium carbonate particles Average particle diameter: 1.5 μm, BET Specific surface area: 0.1 $m^2/g$, Roundness: 1.00

Comparative Examples 1 to 7

Respective Resins P1 to P5, Pa, and Pb, which had different fractions of lactic acid in the resins, were used to prepare films having a thickness of 30 μm in an inflation film extrusion line (60 mm Circular die, Die gap 1.2 mm, Screw diameter 30 mm, L / D ratio = 30). The film was treated with a BUR (Blow-Up Ratio) of 2.5. In the extruder, the temperature in each section was set to 160°C to 180°C and the rotation speed was maintained at 20 rpm.
Table 1 lists the evaluation results of the tensile modulus, elongation, and biodegradability of the obtained films.
As listed in Table 1, P(LA-co-3HB) having the fraction of lactic acid in the range of 20% to 80% provided sufficient flexibility and exhibited excellent elongation in practical use. In Comparative Example 1, however, the elongation was low and the film was brittle. In addition, all of the films had insufficient degradability.

Examples 1 to 9

Respective Resins P3, P4, and P5, which had different fractions of lactic acid in the resin, were used and Calcium carbonate (I) was added to the resin as listed in Table 1. Similarly to Comparative Examples 1 to 7 above, the resultant compositions were used to prepare films having a thickness of 30 μm in the inflation film extrusion line (60 mm Circular die, Die gap 1.2 mm, Screw diameter 30 mm, L/D ratio = 30). The film was treated with a BUR (Blow-Up Ratio) of 3.0. In the extruder, the temperature in each section was set to 160°C to 180°C and the rotation speed was maintained at 20 rpm.
Table 1 lists the evaluation results of the tensile modulus, elongation, and biodegradability of the obtained films.
As listed in Table 1, any of the films according to Examples 1 to 9 provided sufficient flexibility and exhibited excellent elongation in practical use, and the biodegradability was also sufficient.

Examples 10 and 11 and Comparative Example 8

Films having a thickness of 30 μm were prepared by the inflation method in the same manner as the manner in Example 1 except that calcium carbonate (I) was replaced with 12, 13, and Ia.
Table 1 lists the evaluation results of the tensile modulus, elongation, and biodegradability of the obtained films.
As listed in Table 1, both of the films according to Examples 10 and 11 provided excellent results in flexibility and biodegradability. In contrast, Comparative Example 8, in which light calcium carbonate particles were blended as Calcium carbonate (I), provided remarkably inferior moldability and thus a uniform film was difficult to prepare.

[Table 1]

| | Resin component | Resin composition | | Calcium carbonate | Amount of blended calcium carbonate (% by mass) | Tensile modulus (MPa) | Elongation (%) | Biodegradability |
|---|---|---|---|---|---|---|---|---|
| | | Lactic acid (%by mole) | 3-hydroxybutyric acid (% by mole) | | | | | |
| Comparative Example 1 | Pa | 100 | 0 | - | 0 | 3, 600 | 20 | × |
| Comparative Example 2 | P1 | 80 | 20 | - | 0 | 3,300 | 100 | × |
| Comparative Example 3 | P2 | 70 | 30 | - | 0 | 2,800 | 120 | × |
| Comparative Example 4 | P3 | 50 | 50 | - | 0 | 2,500 | 150 | × |
| Comparative Example 5 | P4 | 30 | 70 | - | 0 | 2,200 | 200 | × |
| Comparative Example 6 | P5 | 20 | 80 | - | 0 | 1,900 | 250 | Δ |
| Comparative Example 7 | Pb | 0 | 100 | - | 0 | 1,500 | 300 | Δ |
| Example 1 | P3 | 50 | 50 | I1 | 40 | 2, 600 | 145 | o |
| Example 2 | P3 | 50 | 50 | I1 | 50 | 2,700 | 140 | o |
| Example 3 | P3 | 50 | 50 | I1 | 60 | 2,800 | 140 | o |
| Example 4 | P4 | 30 | 70 | I1 | 40 | 2,400 | 190 | o |
| Example 5 | P4 | 30 | 70 | I1 | 50 | 2,500 | 180 | ◦ |
| Example 6 | P4 | 30 | 70 | I1 | 60 | 2, 600 | 180 | ◦ |
| Example 7 | P5 | 20 | 80 | I1 | 40 | 2,000 | 240 | ◦ |
| Example 8 | P5 | 20 | 80 | I1 | 50 | 2,100 | 230 | ◦ |
| Example 9 | P5 | 20 | 80 | I1 | 60 | 2,200 | 230 | ◦ |
| Example 10 | P3 | 50 | 50 | I2 | 50 | 2,700 | 145 | ◦ |
| Example 11 | P3 | 50 | 50 | I3 | 50 | 2,700 | 140 | ◦ |

(continued)

| | Resin component | Resin composition | | Calcium carbonate | Amount of blended calcium carbonate (% by mass) | Tensile modulus (MPa) | Elongation (%) | Biodegradability |
|---|---|---|---|---|---|---|---|---|
| | | Lactic acid (%by mole) | 3-hydroxybutyric acid (% by mole) | | | | | |
| Comparative Example 8 | P3 | 50 | 50 | Ia | 50 | Impossible to form film | | ∘ |

Comparative Example 9 to 15

Respective Resins P1 to P5, Pa, and Pb, which had different fractions of lactic acid in the resins, were used and molded into sheets having a thickness of 500 μm through a T die at 180°C using a twin-screw extruder. Thereafter, the obtained sheets were further vacuum-molded into shallow dish-shaped container products at a heat plate temperature of 350°C.
Table 2 lists the evaluation results of the tensile modulus, elongation, and biodegradability of the obtained molded products.
As listed in Table 2, any of the molded products had insufficient biodegradability.

Example 12 to 20 and Comparative Example 16 to 18

Respective Resins P1, P2, P3, and Pa, which had different fractions of lactic acid in the resins, were used and Heavy calcium carbonate particles I1 as Calcium carbonate (I) was added to the resins as listed in Table 2. Similarly to Comparative Examples 9 to 15 above, the resultant compositions were used for being molded into sheets having a thickness of 500 μm through a T die at 180°C using a twin-screw extruder. Thereafter, the obtained sheets were further vacuum-molded into shallow dish-shaped container products at a heat plate temperature of 350°C.
Table 2 lists the evaluation results of the tensile modulus, elongation, and biodegradability of the obtained molded products.
As listed in Table 2, any of the molded products according to Examples 12 to 20 provided sufficient flexibility and exhibited excellent elongation in practical use, and the biodegradability was also sufficient.

[Table 2]

| | Resin component | Resin composition | | Calcium carbonate | Amount of blended calcium carbonate (% by mass) | Tensile modulus (MPa) | Elongation (%) | Biodegradability |
|---|---|---|---|---|---|---|---|---|
| | | Lactic acid (%by mole) | 3-hydroxybutyric acid (% by mole) | | | | | |
| Comparative Example 9 | Pa | 100 | 0 | - | 0 | 3, 600 | 20 | × |
| Comparative Example 10 | P1 | 80 | 20 | - | 0 | 3,300 | 100 | × |
| Comparative Example 11 | P2 | 70 | 30 | - | 0 | 2,800 | 120 | × |
| Comparative Example 12 | P3 | 50 | 50 | - | 0 | 2,500 | 150 | × |
| Comparative Example 13 | P4 | 30 | 70 | - | 0 | 2,200 | 200 | × |
| Comparative Example 14 | P5 | 20 | 80 | - | 0 | 1,900 | 250 | Δ |
| Comparative Example 15 | Pb | 0 | 100 | - | 0 | 1,500 | 300 | Δ |
| Comparative Example 16 | Pa | 100 | 0 | I1 | 30 | 3,700 | 20 | × |
| Comparative Example 17 | Pa | 100 | 0 | I1 | 40 | 3,800 | 15 | × |
| Comparative Example 18 | Pa | 100 | 0 | I1 | 60 | 3,900 | 10 | × |
| Example 12 | P1 | 80 | 20 | I1 | 30 | 3,400 | 100 | ∘ |
| Example 13 | P1 | 80 | 20 | I1 | 40 | 3,500 | 100 | ∘ |
| Example 14 | P1 | 80 | 20 | I1 | 60 | 3,600 | 100 | ∘ |
| Example 15 | P2 | 70 | 30 | I1 | 30 | 2,900 | 110 | ∘ |
| Example 16 | P2 | 70 | 30 | I1 | 40 | 3,000 | 110 | ∘ |
| Example 17 | P2 | 70 | 30 | I1 | 60 | 3,100 | 100 | ∘ |
| Example 18 | P3 | 50 | 50 | I1 | 30 | 2,600 | 140 | ∘ |

(continued)

| | Resin component | Resin composition | | Calcium carbonate | Amount of blended calcium carbonate (% by mass) | Tensile modulus (MPa) | Elongation (%) | Biodegradability |
|---|---|---|---|---|---|---|---|---|
| | | Lactic acid (%by mole) | 3-hydroxybutyric acid (% by mole) | | | | | |
| Example 19 | P3 | 50 | 50 | I1 | 40 | 2,700 | 140 | ◦ |
| Example 20 | P3 | 50 | 50 | I1 | 60 | 2,800 | 130 | ◦ |

**Claims**

1. An inorganic substance powder-containing biodegradable resin composition comprising:
a biodegradable resin and an inorganic substance powder in a range by mass of 10:90 to 70:30, wherein the biodegradable resin is a multicomponent hydroxyalkanoic acid copolymer comprising lactic acid and other hydroxyalkanoic acid and the inorganic substance powder is heavy calcium carbonate.

2. The inorganic substance powder-containing biodegradable resin composition according to claim 1, wherein a fraction of lactic acid in the multicomponent hydroxyalkanoic acid copolymer is 20% to 80%.

3. The inorganic substance powder-containing biodegradable resin composition according to claim 1 or 2, wherein the other hydroxyalkanoic acid is hydroxybutyric acid.

4. The inorganic substance powder-containing biodegradable resin composition according to any one of claims 1 to 3, wherein an average particle diameter of the heavy calcium carbonate is 0.7 μm or more and 6.0 μm or less.

5. The inorganic substance powder-containing biodegradable resin composition according to any one of claims 2 to 4, wherein the fraction of lactic acid is 50% to 80% and the inorganic substance powder-containing biodegradable resin composition is used for vacuum molding.

6. The inorganic substance powder-containing biodegradable resin composition according to any one of claims 2 to 4, wherein the fraction of lactic acid is 20% to 50% and the inorganic substance powder-containing biodegradable resin composition is used for inflation molding.

7. A molded product comprising the inorganic substance powder-containing biodegradable resin composition as claimed in any one of claims 1 to 4.

8. A sheet for vacuum molding formed by extrusion molding the inorganic substance powder-containing biodegradable resin composition as claimed in claim 5.

9. A film formed by inflation molding the inorganic substance powder-containing biodegradable resin composition as claimed in claim 6.

10. A molded product formed by vacuum molding the sheet for vacuum molding as claimed in claim 8.

**INTERNATIONAL SEARCH REPORT**

International application No. PCT/JP2020/018870

A. CLASSIFICATION OF SUBJECT MATTER
Int.Cl. C08L67/04(2006.01)i, B29C51/10(2006.01)i, B29C55/28(2006.01)i, C08K3/012(2018.01)i, C08K3/26(2006.01)i, C08K7/18(2006.01)i, C08L101/16(2006.01)i
FI: C08L67/04ZBP, C08K3/26, C08K7/18, C08L101/16, C08K3/012, B29C51/10, B29C55/28
According to International Patent Classification (IPC) or to both national classification and IPC

B. FIELDS SEARCHED
Minimum documentation searched (classification system followed by classification symbols)
Int.Cl. C08L1/00-101/16, B29C44/00-44/60, B29C51/00-51/46, B29C55/00-55/30, C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 08-267968 A (TOPPAN PRINTING CO., LTD.) 15.10.1996 (1996-10-15) | 1-10 |
| A | JP 2002-069303 A (O, Masaru; IBB KK) 08.03.2002 (2002-03-08) | 1-10 |
| A | JP 2018-074927 A (HOKKAIDO UNIVERSITY; OJI HOLDINGS CORPORATION) 17.05.2018 (2018-05-17) | 1-10 |

☐ Further documents are listed in the continuation of Box C.     ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02.07.2020 | 14.07.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/018870

| | | |
|---|---|---|
| JP 08-267968 A | 15.10.1996 | (Family: none) |
| JP 2002-069303 A | 08.03.2002 | (Family: none) |
| JP 2018-074927 A | 17.05.2018 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017503089 W
- JP 2017531101 W
- JP 2018074927 A
- WO 2010082639 A, Pamphlet